# EUROPÄISCHE PATENTSCHRIFT

(11) **EP 0 419 697 B1**
(45) Veröffentlichungstag und Bekanntmachung des Hinweises auf die Patenterteilung: **15.06.1994**
(21) Anmeldenummer: 89117785.9
(22) Anmeldetag: 26.09.1989
(51) Int. Cl.: H04L 1/24

(54) **Verfahren zur Messung der Bitfehlerrate bei der Übertragung von digitalen Informationen**
Method of measuring the bit error rate in the transmission of digital information
Méthode de mesure du taux d'erreur de bit lors de la transmission d'informations numériques

(43) Veröffentlichungstag der Anmeldung: 03.04.1991
(73) Patentinhaber: SIEMENS AKTIENGESELLSCHAFT, 80333 München (DE)
(72) Erfinder: Blaschek, Emil Franz, Dipl.-Ing., A-1170 Wien (AT); Nagler, Werner, Dipl.-Ing., D-8021 Schäftlarn (DE); Tiwald, Eckhard, Dipl.-Ing., A-1030 Wien (AT)

(56) Entgegenhaltungen:
- DE-A- 3 014 732
- GB-A- 1 553 572
- IBM TECHNICAL DISCLOSURE BULLETIN, Band 24, Nr. 7A, Dezember 1981, Seiten 3506-3507, New-York, US; J.CHOLAT-NAMY:"Remote loop test for multiport modems".

## Beschreibung

Die Erfindung betrifft ein Verfahren zur Messung der Bitfehlerrate bei der Übertragung von digitalen Informationen, insbesondere im Zusammenhang mit einer über das Koppelfeld einer digitalen Fernsprechvermittlungsstelle führenden Fernsprechverbindung, demgemäß eine Vielzahl unterschiedlicher digitaler Prüfwörter über den zu überwachenden Übertragungs- bzw. Verbindungsabschnitt gesendet und nach einer Spiegelung an den Sendeort zurückübertragen wird, wo ein Vergleich mit dem jeweils entsprechenden ausgesendeten Prüfwort stattfindet und demgemäß dabei festgestellte Nichtübereinstimmungen gezählt werden und das Überschreiten einer vorgegebenen Anzahl solcher Nichtübereinstimmungen je Zeiteinheit signalisiert wird.

Funktionsprüfungen als solche, bei denen Prüfwörter nach einer Spiegelung und Rückübertragung zum Sendeort dort auf Übereinstimmung mit dem ausgesendeten Prüfwort überwacht werden, sind bekannt, beispielsweise aus IBM Technical Disclosure Bulletin, Band 24, Nr. 7A, Dezember 1981, Seiten 3506-3507, New York, US; J.Cholat-Namy: "Remote Loop Test For Multiport Modems".

Zur Erzeugung solcher Prüfmuster werden gemäß DE-A-3 014 732 programmierbare logische Felder herangezogen.

Um eine möglichst vom Bitmuster des Prüfworts unabhängige Aussage zu erhalten, ist es auch schon bekannt, digitale Prüfwörter mit Hilfe eines Pseudozufallsgenerators zu erzeugen. Die Durchführung eines dem obengenannten Prüfverfahren entsprechenden Verfahrens erfolgt dabei gemäß GB-A- 1 553 572 mit einer Anordnung bei der am Empfangsort ein zweiter Pseudozufallsgenerator vorhanden ist, der mit dem Pseudozufallsgenerator, der die auszusendenden Prüfwörter erzeugt, synchronisiert sein muß, um die Laufzeit zwischen Sendeort und Empfangsort auszugleichen. Wenn die Generatoren in Form eines rückgekoppelten Schieberegisters realisiert sind, kann eine solche Synchronisation in der Weise erfolgen, daß in den Empfangs-Pseudozufallsgenerator bei geöffneter Rückkopplungsschleife zunächst n der empfangenen Bits entsprechend den n Stufen des Schieberegisters eingeschrieben werden und danach die Rückkopplungsschleife wieder geschlossen wird. Sofern die empfangenen Bits auf dem Übertragungsweg nicht verfälscht worden sind, werden dann in der Übertragungslaufzeit entsprechendem Abstand jeweils gleiche Bitmuster von Sende- und Empfangs-Pseudozufallsgenerator erzeugt. Eine zusätzliche Überwachungslogik hat dafür zu sorgen, daß es nicht zu Fehlsynchronisationen aufgrund von Bitverfälschungen kommt.

Eine solche Hardware-Lösung zur Durchführung des genannten Verfahrens zur Messung der Bitfehlerrate ist allerdings relativ aufwendig und erfordert einen entsprechend großen Platzbedarf.

Die Aufgabe der Erfindung besteht darin, ein Verfahren zur Messung der Bitfehlerrate bei der Übertragung von digitalen Informationen anzugeben, das demgegenüber günstiger ist.

Diese Aufgabe wird durch ein Verfahren der eingangs angegebenen Art gelöst, das dadurch gekennzeichnet ist, daß zum Aussenden der Prüfwörter ein solche Prüfwörter enthaltender Lesespeicher ausgelesen wird, und daß im Zuge des genannten Vergleichs diese Prüfwörter jeweils um die für Hin- und Rückübertragung erforderliche Laufzeit später erneut ausgelesen werden.

Aufgrund des erfindungsgemäßen Konzepts entfällt empfangsseitig ein gesonderter Generator zur Erzeugung von Prüfwörtern und darüber hinaus ist eine größere Flexibilität gegeben, da außer Prüfwörtern wie sie ein Pseudozufallsgenerator liefern würde, praktisch jedes beliebige Bitmuster für Prüfwörter abgespeichert werden kann.

Gemäß einer weiteren Ausgestaltung der Erfindung werden die Abläufe bei der Durchführung des erfindungsgemäßen Verfahrens durch einen Mikroprozessor gesteuert, in welchem Falle auch die Synchronisierung der Aussendung von Prüfwörtern und der erneuten Erzeugung von Prüfwörtern im Zusammenhang mit dem Prüfwortvergleich sich mit hardwaremäßig geringem Aufwand realisieren läßt.

Nachstehend wird die Erfindung unter Bezugnahme auf eine FIGUR näher erläutert, in der eine Anordnung zur Durchführung des Verfahrens gezeigt ist.

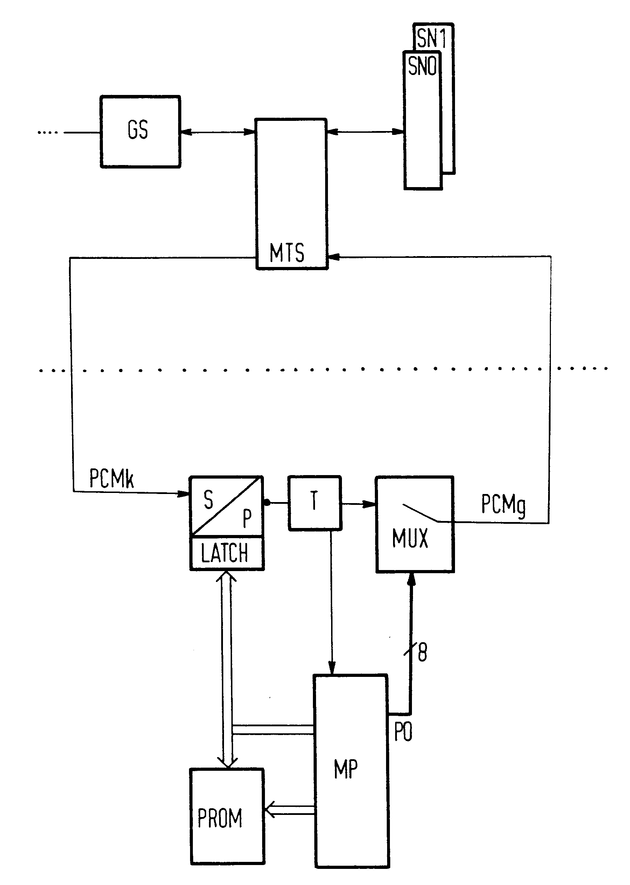

Unterhalb der gestrichelten Linie in der FIGUR sind die im Zusammenhang mit der Prüfworterzeugung und Prüfwortauswertung erforderlichen Schaltungsteile dargestellt. Es ist hier zunächst ein Mikroprozessor MP sowie der zugehörige Programmspeicher PROM zu erwähnen. In diesem Programmspeicher ist auch eine Tabelle enthalten, in der die verschiedenen im Zusammenhang mit der Bitfehlerratenprüfung auszusendenden Prüfwörter gespeichert sind, die zueinander in einem ähnlichen Verhältnis stehen wie mit einem Pseudozufallsgenerator erzeugte Prüfwörter.

Im Zuge der Erzeugung solcher Prüfwörter wird die Tabelle des Programmspeichers P durch den Mikroprozessor MP in periodischen Abständen ausgelesen, die der Periode der Zeitkanalzeitspannen entsprechen, in der im Zuge zu überprüfender Fernsprechverbin-Durchschaltungen erfolgen.

Über den Ausgang PO des Mikroprozessors MP werden diese Prüfwörter an einen Multiplexer MUX in Parallelform gegeben,dort einer Parallel-Serien-Wandlung unterzogen und dann auf eine Multiplexleitung PCMg gegeben,die zu einem Vermittlungsbaustein MTS führt. Die Aufgabe dieses Vermittlungsbausteins ist es, diese Prüfwörter in den der zu prüfenden Verbindung zugeteilten Zeitkanal und den zu prüfenden Verbindungsabschnitt zu vermitteln.

Als zu prüfende Verbindungsabschnitte sind hier der über ein gedoppeltes zentrales Koppelfeld SN0, SN1 oder der über einen Gruppenkoppler GS einer Fernsprechvermittlungsstelle führende Verbindungswegabschnitt angedeutet. Es erfolgt dementsprechend in diesen Koppelfeldern eine Spiegelung der an sie gelangenden Prüfwörter, die daraufhin durch den Vermittlungsbaustein MTS auf die Multiplexleitung PCMk vermittelt werden, die in einen Serien-/Parallel-Wandler S/P mündet, dem ein Register LATCH zugeordnet ist.

Der Serien-Parallel-Wandler S/P sowie der vorerwähnte Multiplexer MUX werden von einer Taktsteuerung T mit Takten beliefert. Die Taktsteuerung liefert außerdem an den Mikroprozessor MP ein Interruptsignal im Zeitabstand der erwähnten Aussendeperiode der Prüfwörter, die beispielsweise 125 »s betragen möge. Durch dieses Interruptsignal wird das Programm gestartet, das der eigentlichen Auswertung der Prüfwörter dient.

Im Zuge der Auswertung wird jeweils um die Laufzeit über die zu prüfende Verbindung nach der Aussendung eines bestimmten Prüfwortes dieses Prüfwort erneut aus der Bitmustertabelle im Lesespeicher PROM ausgelesen und mit dem empfangenen und im Register LATCH abgelegten Prüfwort verglichen. Dieser Vergleich wird ebenfalls durch den Mikroprozessor MP vorgenommen.

Die Laufzeit wird vor der erstmaligen Durchführung eines solchen Vergleichs gemessen, wozu zunächst über eine Zeitspanne hinweg, die länger als die größtmögliche Laufzeit ist, ein bestimmtes Bitmuster gesendet wird, um definierte Verhältnisse herzustellen. Sodann wird ein spezielles Prüfwort ausgesendet und die Anzahl der Pulsrahmen bis zum Eintreffen dieses Wortes im Register LATCH ermittelt. Dieser Vorgang wird mit einem weiteren speziellen Prüfwort und sodann nochmals mit dem erstgenannten speziellen Prüfwort wiederholt. Sofern bei diesen drei aufeinanderfolgenden Laufzeitmessungen eine Übereinstimmung erzielt worden ist, wird die ermittelte Laufzeit den nachfolgenden Vergleichen zugrundegelegt.

Bei der Auswertung der empfangenen Prüfwörter werden die dabei festgestellten Nichtübereinstimmungen aufsummiert und in einem Register abgespeichert. Dabei wird auch jeweils ein Vergleich mit einem Fehlerschwellwert vorgenommen, dessen Überschreiten zur Abgabe eines entsprechenden Meldung führt.

## Patentansprüche

1. Verfahren zur Messung der Bitfehlerrate bei der Übertragung von digitalen Informationen, insbesondere im Zusammenhang mit einer über das Koppelfeld einer digitalen Fernsprechvermittlungsstelle führenden Fernsprechverbindung, demgemäß eine Vielzahl unterschiedlicher digitaler Prüfwörter über den zu überwachenden Übertragungs- bzw. Verbindungsabschnitt gesendet und nach einer Spiegelung an den Sendeort zurückübertragen wird, wo ein Vergleich mit dem jeweils entsprechenden ausgesendeten Prüfwort stattfindet und demgemäß dabei festgestellte Nichtübereinstimmungen gezählt werden und das Überschreiten einer vorgegebenen Anzahl solcher Nichtübereinstimmungen je Zeiteinheit signalisiert wird,
**dadurch gekennzeichnet**,
daß zum Aussenden der Prüfwörter ein solche Prüfwörter enthaltender Lesespeicher (PROM) ausgelesen wird, und daß im Zuge des genannten Vergleichs diese Prüfwörter jeweils um die für Hin- und Rückübertragung erforderliche Laufzeit später erneut ausgelesen werden.

2. Verfahren nach Anspruch 1,
**dadurch gekennzeichnet**,
daß sein Ablauf durch einen Mikroprozessor (MP) gesteuert wird.

3. Verfahren nach Anspruch 1,
**dadurch gekennzeichnet,**
daß der Betrieb des Mikroprozessors (MP) mittels eines Taktgebers auf die Zeitverhältnisse synchronisiert ist, die der Aussendung und dem Empfang der Prüfwörter zugrundeliegen.

## Claims

1. Method for measuring the bit error rate during the transmission of digital information, preferably in connection with a telephone connection carried over the switching network of a digital telephone exchange, in accordance with which a multiplicity of different digital test words are sent over the transmission or connection section to be monitored and after mirroring are transmitted back to the sending location, where a comparison is made with the respective corresponding test word transmitted, and accordingly any mismatches thereby identified are counted and the exceeding of a predetermined number of such mismatches per unit of time is signalled, characterized in that a read-only memory (PROM) containing such test words is read for transmitting the test words, and in that in the course of the aforesaid comparison, said test words are read out again later in each case by the transit time required for the outward and return transmission.

2. Method according to Claim 1, characterized in that its execution is controlled by a microprocessor (MP).

3. Method according to Claim 1, characterized in that the operation of the microprocessor (MP) is synchronized to the time conditions on which the transmission and the reception of the test words are based by means of a clock generator.

## Revendications

1. Procédé de mesure du taux d'erreurs binaires dans le cas de la transmission d'informations numériques, notamment en rapport avec une liaison téléphonique menant à un poste de commutation téléphonique numérique, par l'intermédiaire du champ de couplage, procédé suivant lequel on émet un grand nombre de mots de contrôle numériques différents, par l'intermédiaire de la section de transmission ou de la section de liaison à contrôler et on la retransmet, après une réflexion sur l'emplacement d'émission, où une comparaison a lieu avec le mot de contrôle correspondant émis, et suivant lequel on compte des non-concordances déterminées et on signale par unité temporelle, le dépassement d'un nombre prédéterminé de non-concordances de ce genre,
caractérisé par le fait
que, pour l'émission des mots de contrôle, on lit une mémoire de lecture (PROM) contenant des mots de ce genre, et que lors de ladite comparaison, on lit à nouveau ces mots de contrôle après le temps de propagation nécessaire pour une transmission aller/retour.

2. Procédé suivant la revendication 1,
caractérisé par le fait que l'on commande son déroulement par un micro-processeur (MP).

3. Procédé suivant la revendication 1, caractérisé par le fait que l'on synchronise le fonctionnement du microprocesseur (MP), au moyen d'un générateur de cadence, sur les rapports temporels qui sont basés sur l'émission et la réception des mots de contrôle.
